# EUROPEAN PATENT APPLICATION

(11) **EP 4 621 444 A1**
(43) Date of publication of application: **24.09.2025**
(21) Application number: 23890626.7
(22) Date of filing: 03.11.2023
(51) Int. Cl.: G01S 19/42

(54) **POINT-CLOUD-BASED METHOD, SYSTEM AND DEVICE FOR NAVIGATION IN QUAY CRANE AREA, AND STORAGE MEDIUM**

(30) Priority: 16.11.2022 CN 202211433636
(71) Applicant: Shanghai Westwell Technology Co., Ltd., Shanghai 200050 (CN)
(72) Inventor: TAN, Limin, Shanghai 200050 (CN); ZHOU, Xiaokai, Shanghai 200050 (CN); LI, Ying, Shanghai 200050 (CN)
(74) Representative: De Vries & Metman
(86) International application number: PCT/CN2023/129521
(87) International publication number: WO 2024/104190

(57) **Abstract**

Provided in the present invention are a point-cloud-based method, system and device for navigation in a quay crane area, and a storage medium. The method comprises the following steps: traveling to a peripheral area of a quay crane area on the basis of a first navigation path based on GPS positioning data; performing in the peripheral area continuous spatial scanning on at least part of the quay crane area, establishing point cloud map data of a cargo ship in the quay crane area, detecting a GPS positioning signal in real time, and matching a point cloud object in the point cloud map data with the GPS positioning data; when the GPS positioning signal does not meet a preset signal intensity threshold, generating a second navigation path on the basis of the completed point cloud map data; and performing a loading and unloading operation with a quay crane at least on the basis of the second navigation path. By means of the present invention, in a scenario where a cargo ship is docked at a quay and GPS positioning fails, edge information of the cargo ship can be fully used to implement six-degrees-of-freedom self-positioning of a vehicle, thereby greatly improving the accuracy and safety of alignment of a container truck with a quay crane.

## Description

### TECHNICAL FIELD

The present disclosure relates to the technical field of navigation and positioning, and in particular, to a point cloud-based navigation method, a system, and a device in a quay crane area, and a storage medium.

### BACKGROUND

With the development of computer technology, automatic identification and positioning technology of vehicles and containers are increasingly used in ports and docks in our country, which can greatly reduce labor costs, improve work efficiency, and enhance work accuracy. Currently, the commonly used vehicle positioning technology is based on GPS devices on vehicles. However, in a quay crane area, due to signal blockage by large ships and/or quay cranes, the GPS signal strength is insufficient, making it impossible for GPS devices to perform positioning. Therefore, positioning methods based on traditional GPS devices cannot perform vehicle positioning in such environments. Moreover, the lane lines under quay cranes are different from those on ordinary roads. For example, the lane lines under quay cranes are yellow and have a different width from ordinary roads, so positioning methods based on lane lines on ordinary roads cannot work properly in quay crane areas.

It has always been a challenge to perform self-positioning of vehicles under quay cranes. It will be more difficult when large ships are docked, the large ships usually form a high wall of up to 20 meters, which, together with quay cranes, encloses GPS devices, making GPS positioning fail. When the vehicles change lanes, turn, or reverse under quay cranes, lane lines appear at the contour of the camera's field of view, causing large observation errors. Even if lane lines are fully observed, longitudinal positioning deviation is generated for long-term lack of longitudinal constraint. In addition to quay cranes that may move at any time, there are usually no other static markers deployed by the shore. Therefore, for traditional positioning method based on GPS and vision, performance limitations may arise in the quay crane area.

It should be noted that the information disclosed in the above background section is only for facilitating the understanding of the background of the present disclosure and may include information that does not constitute prior art known to those skilled in the art.

### SUMMARY

To solve the problems in the prior art, the purpose of the present disclosure is to provide a point cloud-based navigation method, a system, and a device in a quay crane area, and a storage medium, which can overcome the difficulties of the prior art, utilize contour information of cargo ships to achieve self-positioning of vehicles in scenarios where docked cargo ships cause GPS positioning to fail, and improve the alignment accuracy between container trucks and quay cranes.

Embodiments of the present disclosure provide a point cloud-based navigation method in a quay crane area, including the following steps: navigating to a peripheral area of a quay crane area along a first navigation path based on GPS positioning data; performing continuous spatial scanning on at least part of the quay crane area in the peripheral area to establish point cloud map data of a cargo ship in the quay crane area, detecting GPS positioning signal in real time, and matching point cloud objects in the point cloud map data with the GPS positioning data; generating a second navigation path based on completed point cloud map data when the GPS positioning signal does not meet a preset signal strength threshold; and performing a loading and unloading operation with the quay crane at least based on the second navigation path.

Alternatively, the step of navigating to a peripheral area of a quay crane area along a first navigation path based on GPS positioning data includes: establishing the first navigation path to the quay crane area as a destination based on the GPS positioning data; navigating to the peripheral area of the quay crane area along the first navigation path, wherein the peripheral area is an area surrounding the quay crane area as the center.

Alternatively, the step of performing continuous spatial scanning on at least part of the quay crane area in the peripheral area to establish point cloud map data of a cargo ship in the quay crane area, detecting GPS positioning signal in real time, and matching point cloud objects in the point cloud map data with the GPS positioning data includes: performing continuous spatial scanning on at least part of the quay crane area when entering the peripheral area; establishing or updating the point cloud map data of the cargo ship in the quay crane area; performing point cloud recognition based on the point cloud map data to obtain the point cloud objects; performing mapping on the cargo ship based on the point cloud data of the cargo ship in the point cloud objects to establish or update surface feature data of the cargo ship; detecting the GPS positioning signal in real time and matching the surface feature data of the cargo ship with the GPS positioning data.

Alternatively, the step of performing continuous spatial scanning on at least part of the quay crane area in the peripheral area to establish point cloud map data of a cargo ships in the quay crane area, detecting GPS positioning signal in real time, and matching point cloud objects in the point cloud map data with the GPS positioning data further includes: interacting with surrounding terminals that have already mapped the cargo ship to supplement local surface feature data of the cargo ship.

Alternatively, the step of generating a second navigation path based on completed point cloud map data when the GPS positioning signal does not meet a preset signal strength threshold includes: determining whether the GPS positioning signal meets the preset signal strength threshold; if yes, returning to the step of performing continuous spatial scanning on at least part of the quay crane area in the peripheral area; if no, generating the second navigation path based on the surface feature data of the cargo ship and a preset loading and unloading target position.

Alternatively, the step of performing a loading and unloading operation with the quay crane at least based on the second navigation path includes: navigating to a preset loading and unloading target position along the second navigation path; performing a loading and unloading operation with the quay crane after arriving at the preset loading and unloading target position.

Alternatively, the method further includes the steps of: continuing spatial scanning to supplement the point cloud map data, and establishing a third navigation path to leave the quay crane area based on the point cloud map data after the loading and unloading operation is completed; navigating away from the quay crane area along the third navigation path, detecting the GPS positioning signal in real time, and switching back to navigation at least based on GPS positioning data when the GPS positioning signal meets the preset signal strength threshold.

Embodiments of the present disclosure further provide a point cloud-based navigation system in a quay crane area, including: a first path module configured to navigate to a peripheral area of the quay crane area along a first navigation path based on GPS positioning data; a spatial scanning module configured to perform continuous spatial scanning on at least part of the quay crane area in the peripheral area to establish point cloud map data of a cargo ship in the quay crane area, detect the GPS positioning signal in real time, and match point cloud objects in the point cloud map data with the GPS positioning data; a second path module configured to generate a second navigation path based on completed point cloud map data when the GPS positioning signal does not meet a preset signal strength threshold; and a loading and unloading navigation module configured to perform a loading and unloading operation with the quay crane at least based on the second navigation path.

Alternatively, the spatial scanning module is configured to: perform continuous spatial scanning on at least part of the quay crane area when entering the peripheral area; establish or update point cloud map data of a cargo ship in the quay crane area; perform point cloud recognition based on the point cloud map data to obtain point cloud objects; perform mapping on the cargo ship based on the point cloud data of the cargo ship in the point cloud objects to establish or update surface feature data of the cargo ship; detect the GPS positioning signal in real time and match the surface feature data of the cargo ship with the GPS positioning data.

Alternatively, the system further includes: a third path module configured to continue spatial scanning to supplement the point cloud map data and establish a third navigation path to leave the quay crane area based on the point cloud map data after the loading and unloading operation is completed; and a navigation switching module configured to navigate away from the quay crane area along the third navigation path, detect the GPS positioning signal in real time, and switch back to navigation at least based on the GPS positioning data when the GPS positioning signal meets the preset signal strength threshold.

Embodiments of the present disclosure further provide a point cloud-based navigation device in a quay crane area, including: a processor; a memory configured to store executable instructions for the processor; wherein the processor is configured to execute the steps of the point cloud-based navigation method in a quay crane area by executing the executable instructions.

Embodiments of the present disclosure further provide a computer-readable storage medium for storing a program, wherein the steps of the point cloud-based navigation method in a quay crane area are realized when the program is executed.

The point cloud-based navigation method, system, and device in a quay crane area, and the storage medium of the present disclosure can fully utilize contour information of cargo ships to achieve six-degree-of-freedom self-positioning of vehicles in scenarios where docked cargo ships cause GPS positioning to fail, thereby greatly improving the accuracy and safety of alignment between container trucks and quay cranes.

### BRIEF DESCRIPTION OF THE DRAWINGS

Other features, objectives and advantages of the present disclosure will become more apparent from reading the detailed description of non-limiting embodiments made with reference to the following accompanying drawings.
FIG. 1 is a flowchart of a point cloud-based navigation method in a quay crane area of the present disclosure.
FIGS. 2 to 6 are schematic diagrams of an implementation process of the point cloud-based navigation method in a quay crane area of the present disclosure.
FIG. 7 is a block diagram of a point cloud-based navigation system in a quay crane area of the present disclosure.
FIG. 8 is a block diagram of the point cloud-based navigation device in a quay crane area of the present disclosure.
FIG. 9 is a schematic diagram of a computer-readable storage medium according to an embodiment of the present disclosure.

### DETAILED DESCRIPTION

In the following, embodiments of the present disclosure are described through specific examples, so those skilled in the art can easily understand other advantages and effects of the present disclosure from the disclosed contents of the present disclosure. The present disclosure can also be implemented or applied through other different specific embodiments, and various details in the present disclosure can be modified or changed based on different concepts and application scenarios without departing from the spirit of the present disclosure. It should be noted that, in the absence of conflict, the embodiments and features in the embodiments of the present disclosure can be combined with each other.

In the following, the drawings are taken as references to describe the embodiments of the present disclosure in detail, so that those skilled in the art of the present disclosure can easily implement the present disclosure. The present disclosure can be embodied in multiple different forms and is not limited to the embodiments described herein.

In the description of the present disclosure, terms such as "one embodiment," "some embodiments," "examples," "specific examples," or "some examples" mean that a specific feature, structure, material, or characteristic described in conjunction with the embodiment or example is included in at least one embodiment or example of the present disclosure. Moreover, the specific features, structures, materials, or characteristics described may be combined in any suitable manner in any one or more embodiments or examples. Additionally, those skilled in the art can combine and integrate different embodiments or examples and features of different embodiments or examples described in the description without conflicting with each other.

For clarity, devices not relevant to the description are omitted herein, and the same reference numbers are used to represent the same or similar components throughout the description.

Throughout the description, when a device is described as "being connected" to another device, this includes not only the case of "direct connection" but also the case of "indirect connection" with other components interposed therebetween. Additionally, when a device is described as "including" a certain component, unless otherwise specifically stated, other components are not excluded, and other components may also be included.

When a device is described as "being on" another device, this may mean being directly on the other device, or there may be other devices in between. When it is described conversely that a device is "directly on" another device, there are no other devices in between.

Although terms such as first and second are used in the present disclosure to represent various components in some instances, these components should not be limited by these terms. These terms are only used to distinguish one component from another. For example, the first interface and the second interface, etc. Furthermore, as used in the present disclosure, the singular forms "a," "an," and "the" are intended to include the plural forms as well, unless the context clearly indicates otherwise. The meaning of "a plurality" is two or more, unless specifically and explicitly defined otherwise. It should be further understood that the terms "include" and "include" indicate the presence of the stated features, steps, operations, components, assemblies, items, categories, and/or groups, but do not exclude the presence, occurrence, or addition of one or more other features, steps, operations, components, assemblies, items, categories, and/or groups. The terms "or" and "and/or" used herein are interpreted in an inclusive sense, meaning any one or any combination. Thus, "A, B, or C" or "A, B, and/or C" means "any of the following: A; B; C; A and B; A and C; B and C; A, B, and C." The exception to this definition will only arise when the combination of components, functions, steps, or operations is inherently mutually exclusive in some manner.

Although not defined differently herein, the terms including technical and scientific terms used herein, have the same meaning as commonly understood by those skilled in the art of the present disclosure. Terms defined in commonly used dictionaries are additionally interpreted to have meanings consistent with those in related technical documents and the current disclosure, and should not be excessively interpreted as ideal or overly formal meanings as long as no definition has been made.

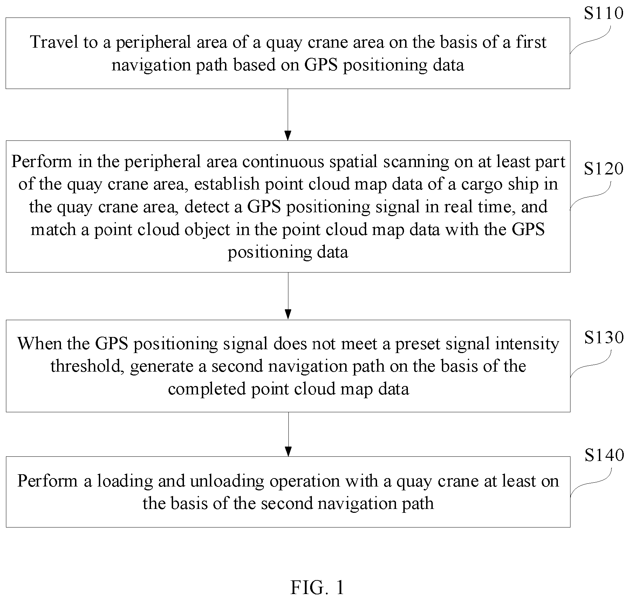

FIG. 1 is a flowchart of the point cloud-based navigation method in a quay crane area of the present disclosure. As shown in FIG. 1, an embodiment of the present disclosure provides a point cloud-based navigation method in a quay crane area, including the following steps:
S110. navigating to a peripheral area of a quay crane area along a first navigation path based on GPS positioning data;
S120. performing continuous spatial scanning on at least part of the quay crane area in the peripheral area to establish point cloud map data of a cargo ship in the quay crane area, detecting GPS positioning signal in real time, and matching point cloud objects in the point cloud map data with the GPS positioning data;
S130. generating a second navigation path based on completed point cloud map data when the GPS positioning signal does not meet a preset signal strength threshold; and
S140. performing a loading and unloading operation with the quay crane at least based on the second navigation path.

The present disclosure fully utilizes contour information (surface feature information) of cargo ships to achieve six-degree-of-freedom self-positioning of vehicles in scenarios where docked cargo ships cause GPS positioning to fail, thereby greatly improving the accuracy and safety of alignment between container trucks and quay cranes.

In an alternative embodiment, the step S110 includes:
S111. establishing the first navigation path to the quay crane area as a destination based on the GPS positioning data;
S112. navigating to the peripheral area of the quay crane area along the first navigation path, wherein the peripheral area is an area surrounding the quay crane area as the center, but the present disclosure is not limited to this.

In an alternative embodiment, the step S120 includes:
S121. performing continuous spatial scanning on at least part of the quay crane area when entering the peripheral area;
S122. establishing or updating point cloud map data of a cargo ship in the quay crane area;
S123. performing point cloud recognition based on the point cloud map data to obtain point cloud objects;
S124. performing mapping on the cargo ship based on the point cloud data of the cargo ship in the point cloud objects to establish or update surface feature data of the cargo ship;
S125. detecting the GPS positioning signal in real time and matching the surface feature data of the cargo ship with the GPS positioning data, but the present disclosure is not limited thereto.

In an alternative embodiment, the step S120 further includes:
S126. interacting with surrounding terminals that have already mapped the cargo ship to supplement local surface feature data of the cargo ship. The terminals in this embodiment may include container trucks with point cloud acquisition capabilities, but the present disclosure is not limited thereto.

In an alternative embodiment, the step S130 includes:
S131. determining whether the GPS positioning signal meets the preset signal strength threshold; if yes, returning to the step S120; if no, perform step S132;
S132. generating the second navigation path based on the surface feature data of the cargo ship and a preset loading and unloading target position, but the present disclosure is not limited thereto.

In an alternative embodiment, step S140 includes:
S141. navigating to the preset loading and unloading target position along the second navigation path.
S142. performing the loading and unloading operation with the quay crane after arriving at the preset loading and unloading target position, but the present disclosure is not limited to this.

In an alternative embodiment, the method further includes:
S150. continuing spatial scanning to supplement point cloud map data, and establishing a third navigation path to leave the quay crane area based on the point cloud map data after the loading and unloading operation is completed.
S160. navigating away from the quay crane area along the third navigation path, detecting the GPS positioning signal in real time, and switching back to navigation at least based on the GPS positioning data when the GPS positioning signal meets the preset signal strength threshold, but the present disclosure is not limited thereto.

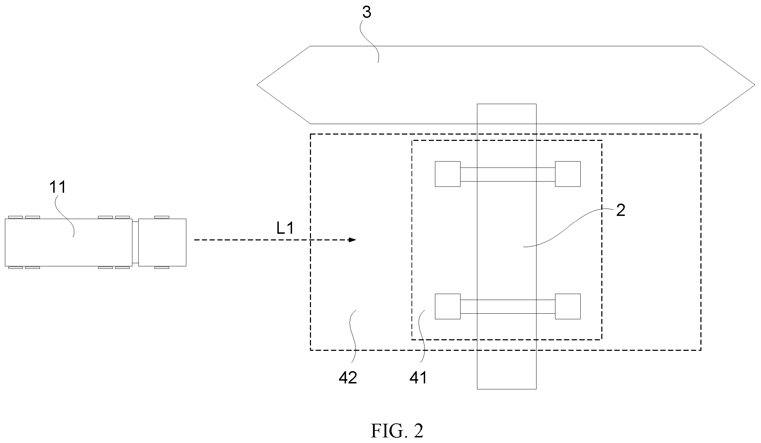

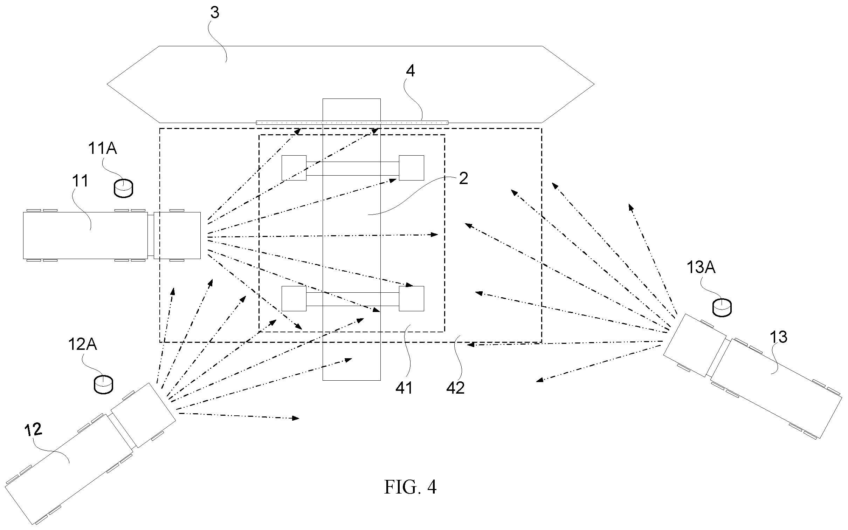

FIGS. 2 to 6 are schematic diagrams of an implementation process of the point cloud-based navigation method in a quay crane area of the present disclosure. As shown in FIG. 2, before the container truck 11 of the present disclosure enters a shielding area of the quay crane 2, the (RTK) GPS signal is unobstructed and can provide positioning data with centimeter-level accuracy. The container truck 11 establishes a first navigation path L1 to the quay crane area 41 as the destination based on the GPS positioning data, and navigates to the peripheral area 42 of the quay crane area 41 along the first navigation path L1. The peripheral area 42 is an area surrounding the quay crane area 41 as the center. At this time, the GPS signal is not blocked by the quay crane 2 and the cargo ship 3, so precise navigation can be performed based on the GPS data. The Global Positioning System (GPS) is a high-precision radio navigation and positioning system based on artificial earth satellites, which can provide accurate geographic location, vehicle speed, and precise time information anywhere in the world and in near-Earth space. In this embodiment, the container truck 11 uses real-time kinematic (RTK) dynamic measurement technology, which is a real-time differential GPS (RTDGPS) technology based on carrier phase observation data. RTK technology is a breakthrough in the development of measurement technology and consists of three parts: a reference station receiver, a data link, and a rover receiver. A receiver is placed on a baseline station as a reference station, which continuously observes the satellites and transmits the observation data and station information thereof to the rover in real time via radio transmission equipment. While receiving the GPS satellite signals, the GPS receiver of the rover receives the data transmitted by the reference station via wireless receiving equipment, and then calculates the three-dimensional coordinates and the accuracy of the rover in real time according to the principle of relative positioning (i.e., the WGS-84 coordinates of each point are obtained by adding the coordinate difference ΔX, ΔY, ΔH between the reference station and the rover to reference coordinates, and the plane coordinates X, Y, and altitude H of each point of the rover are obtained based on coordinate conversion parameters). RTK technology supports both radio and network communication modes for data transmission.

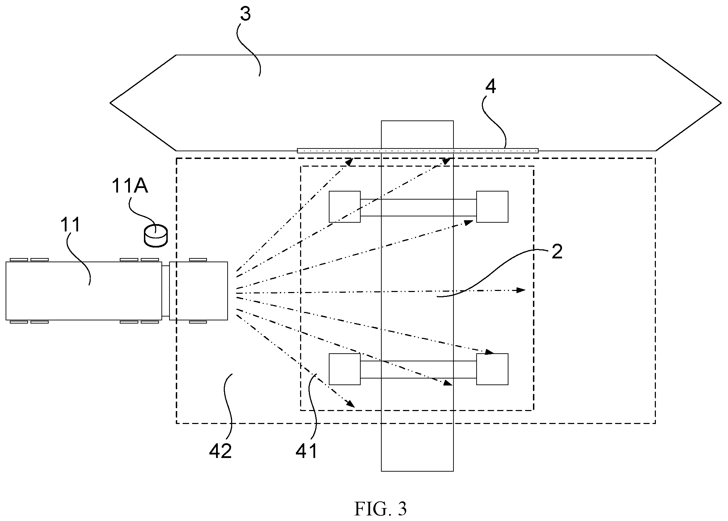

As shown in FIG. 3, when the container truck 11 enters the peripheral area 42, the container truck 11 performs continuous spatial scanning on at least part of the quay crane area 41 to establish or update the point cloud map data of the cargo ship 3 in the quay crane area 41, performs mapping on the cargo ship 3 based on the point cloud data of the cargo ship 3 in the point cloud objects, establishes or updates the surface feature data 11A of a side surface 4 of the cargo ship 3 facing the quay crane 2, detects the GPS positioning signal in real time, and matches the surface feature data of the cargo ship 3 with the GPS positioning data. For example, the point cloud map of the front cargo ship 3 is constructed by using GPS data and laser data based on SLAM method. Point cloud recognition also needs to be performed based on the point cloud map data and according to high-precision map to obtain various kinds of point cloud objects. The point cloud objects may include quay cranes, cargo ships, container trucks, etc. In this embodiment, existing point cloud recognition technology can be used to recognize various kinds of point cloud objects (quay cranes, cargo ships, container trucks, spreaders, etc.) from the point cloud map based on recognition algorithms. For example, the point cloud map is input into an existing fully convolutional neural network to recognize 3D object, which is not described in detail herein. Moreover, the point clouds of the quay crane 2 and other vehicles in the field of view are filtered out, and only the point cloud data of the cargo ship 3 are retained (pure point cloud data of the cargo ship 3 are preferably obtained to reduce subsequent errors). The currently received laser data is matched and positioned with the already generated map, and then compared with the previous GPS positioning result to verify the reliability of the map ahead. If the position based on the point cloud map data is the same as the results (the position of the cargo ship, the position of the quay crane) in the first navigation path L1, the current point cloud map data are considered trustworthy.

Moreover, since a single container truck may only scan partial point clouds of the cargo ship, to improve this problem, in an alternative solution, the container truck 11 may interact with other surrounding container trucks 12 and 13 that have mapped the cargo ship 3 to obtain the partial point clouds of the cargo ship from the container trucks 12 and 13 (the surface feature data 12A of the cargo ship 3 obtained by the container truck 12 and the surface feature data 13A of the cargo ship 3 obtained by the container truck 13), thereby supplementing the surface feature data of the cargo ship 3 in the container truck 11. The large cargo ship 3 usually does not move during operations, but their draft depth changes due to continuous loading and unloading operations of containers. However, this loading and unloading process is relatively slow. Therefore, if any vehicle has good GPS signal status recently, the vehicle can perform mapping on the cargo ship 3. Through a cloud-client model, the point cloud data verified as accurate is added to the cloud for stitching and then distributed to each vehicle. In this embodiment, an existing technical solution for stitching local representation features is used to merge the surface feature data 11A, 12A, and 13A of the cargo ship 3 obtained by different container trucks, to acquire a more complete surface feature data of the cargo ship 3 through steps such as partition comparison of similar features and stitching trial and error, which are not described in detail herein. This can effectively avoid the accumulation of errors in the above steps.

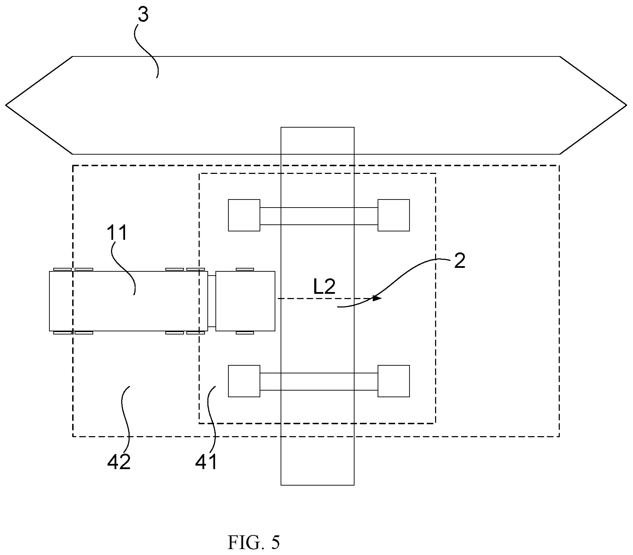

As shown in FIG. 5, after entering the shielding area of the quay crane 2, once the GPS signal fades due to shielding, the work of map building based on GPS signal is immediately terminated. Specifically, the container truck 11 determines in real time whether the GPS positioning signal meets the preset signal strength threshold. If yes, return to the step of performing continuous spatial scanning on at least part of the quay crane area 41 to establish or update the point cloud map data of the cargo ship 3 in the quay crane area 41. If no, the container truck 11 has entered the shielding area of the quay crane 2, and generates the second navigation path L2 in the container truck's local coordinate system based on the surface feature data of the cargo ship 3 and the preset loading and unloading target position. In the embodiment, the preset loading and unloading target position is a loading and unloading alignment area with an accurate positional relationship based on the surface feature data of the cargo ship. When the container truck 11 uses the surface feature data of a non-moving cargo ship 3 as the positioning basis, the corresponding loading and unloading alignment area can be accurately obtained, thereby using the loading and unloading alignment area as the destination of the second navigation path L2. The container truck 11 navigates to the preset loading and unloading target position along the second navigation path L2 and performs the loading and unloading operation with the quay crane 2 after arriving at the preset loading and unloading target position. At this time, laser is used to match and position with the already generated point cloud map to support the vehicle to complete the operation under the quay crane 2. At this time, high positioning accuracy (about 10 cm) is usually required to complete the loading and unloading interaction with the quay crane 2. This embodiment further includes the step of determining the specific position of the spreader of the quay crane 2 in the container truck's local coordinate system as the destination of the second navigation path L2 based on the positional relationship between the surface feature data of the cargo ship 3 self-collected by the container truck 11 and the point cloud of the spreader of the quay crane 2 (the point cloud representing the spreader obtained by point cloud recognition), thereby achieving precise path navigation without GPS assistance.

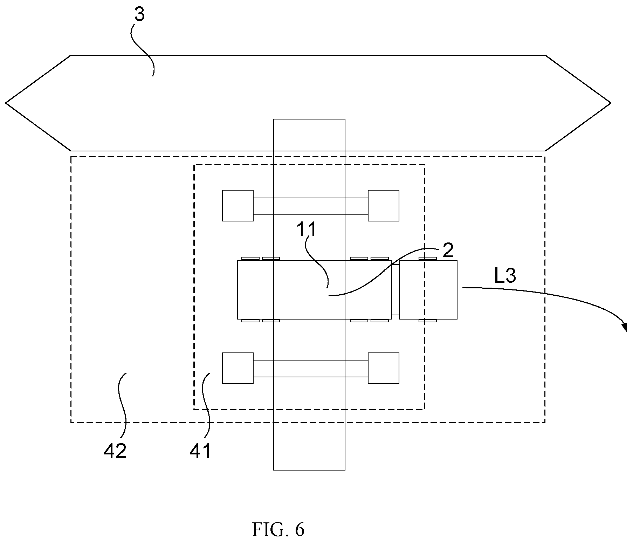

As shown in FIG. 6, finally, the container truck 11 can also continue to perform point cloud scanning on the space where the container truck 11 is currently located during the loading and unloading interaction operation to continuously supplement the point cloud map data. After the loading and unloading operation is completed, a third navigation path L3 to leave the quay crane area 41 is established based on the point cloud map data. The container truck 11 navigates away from the quay crane area 41 along the third navigation path L3, detects the GPS positioning signal in real time, and switches back to navigation at least based on the GPS positioning data when the GPS positioning signal meets the preset signal strength threshold. After the operation is completed, since the positioning accuracy requirement is lower, the map area is expanded at this time to provide a reference for continued positioning. The method to expand the map area includes generating new point cloud map, and continuously comparing and stitching the newly generated point cloud map with the common area of the point cloud map generated before entering the quay crane 2. Due to the lack of GPS as a global observation, errors may accumulate gradually. However, the absolute accuracy requirement for the navigation process in this area is low, as long as the container truck does not intrude into other adjacent lanes (positioning error exceeding 50 cm). Through experiments, the maximum error of this method after driving 200 meters without GPS is about 30 cm.

The point cloud-based navigation method in a quay crane area of the present disclosure fully utilizes the contour information of cargo ships to achieve six-degree-of-freedom self-positioning of vehicles in scenarios where docked cargo ships cause GPS positioning to fail, thereby greatly improving the accuracy and safety of container truck alignment with quay cranes.

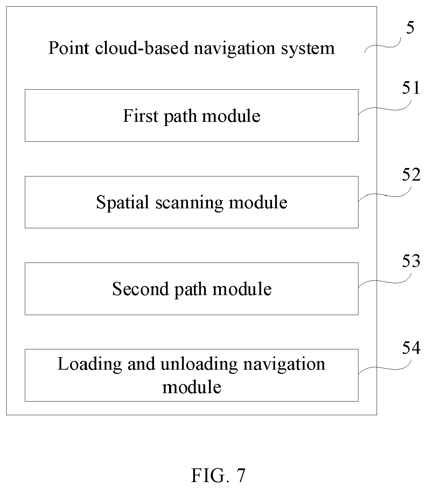

FIG. 7 is a structural diagram of the point cloud-based navigation system in a quay crane area of the present disclosure. As shown in FIG. 7, the point cloud-based navigation system 5 in a quay crane area of the present disclosure includes:
a first path module 51 configured to navigate to a peripheral area of the quay crane area along a first navigation path based on GPS positioning data;
a spatial scanning module 52 configured to perform continuous spatial scanning on at least part of the quay crane area in the peripheral area to establish point cloud map data of a cargo ship in the quay crane area, detect GPS positioning signal in real time, and match point cloud objects in the point cloud map data with the GPS positioning data;
a second path module 53 configured to generate a second navigation path based on completed point cloud map data when the GPS positioning signal does not meet a preset signal strength threshold; and
a loading and unloading navigation module 54 configured to perform a loading and unloading operation with the quay crane at least based on the second navigation path.

In an alternative embodiment, the first path module 51 is configured to establish a first navigation path with the quay crane area as the destination based on GPS positioning data, and navigate to the peripheral area of the quay crane area along the first navigation path, wherein the peripheral area is an area surrounding the quay crane area as the center.

In an alternative embodiment, the spatial scanning module 52 is configured to: perform continuous spatial scanning on at least part of the quay crane area when entering the peripheral area; establish or update the point cloud map data of a cargo ship in the quay crane area; perform point cloud recognition based on the point cloud map data to obtain point cloud objects; perform mapping on the cargo ship based on the point cloud data of the cargo ship in the point cloud objects to establish or update surface feature data of the cargo ship; detect the GPS positioning signal in real time and match the surface feature data of the cargo ship with the GPS positioning data.

In an alternative embodiment, the spatial scanning module 52 is further configured to interact with surrounding terminals that have mapped the cargo ship to supplement local surface feature data of the cargo ship.

In an alternative embodiment, the second path module 53 is configured to determine whether the GPS positioning signal meets the preset signal strength threshold, if yes, return to the spatial scanning module 52 to perform the spatial scanning step; if not, generate the second navigation path based on the surface feature data of the cargo ship and a preset loading and unloading target position.

In an alternative embodiment, the loading and unloading navigation module 54 is configured to navigate to the preset loading and unloading target position based on the second navigation path and perform a loading and unloading operation with the quay crane after arriving at the preset loading and unloading target position.

In an alternative embodiment, the system further includes a third path module 55 and a navigation switching module 56. The third path module 55 is configured to continue spatial scanning to supplement the point cloud map data and establish a third navigation path to leave the quay crane area based on the point cloud map data after the loading and unloading operation is completed. The navigation switching module 56 is configured to navigate away from the quay crane area along the third navigation path, detect the GPS signal in real time, and switch back to navigation at least based on GPS signal once the GPS signal strength meets the preset signal strength threshold.

The point cloud-based navigation system in a quay crane area of the present disclosure can fully utilize contour information of cargo ships to achieve six-degree-of-freedom self-positioning of vehicles in scenarios where docked cargo ships cause GPS positioning to fail, thereby greatly improving the accuracy and safety of alignment between the container truck and the quay crane.

Embodiments of the present disclosure further provide a point cloud-based navigation device in a quay crane area, including a processor and a memory storing executable instructions for the processor. The processor is configured to execute the steps of the point cloud-based navigation method in a quay crane area by executing the executable instructions.

As described above, the point cloud-based navigation device in a quay crane area of the present disclosure can fully utilize the contour information of cargo ships to achieve six-degree-of-freedom self-positioning of vehicles in scenarios where docked cargo ships cause GPS positioning to fail, thereby greatly improving the accuracy and safety of alignment of the container truck with the quay crane.

Those skilled in the art can understand that various aspects of the present disclosure can be implemented as systems, methods, or program products. Therefore, various aspects of the present disclosure can be embodied in the following forms: entirely hardware implementations, entirely software implementations (including firmware, microcode, etc.), or hybrid hardware-software implementations, collectively referred to herein as "circuits," "modules," or "platforms."

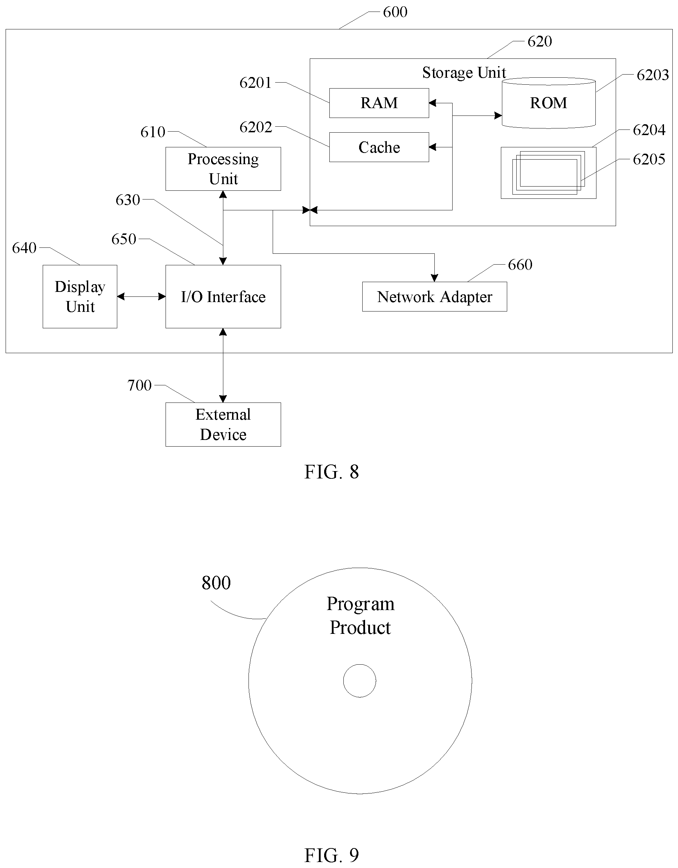

FIG. 8 is a structural diagram of the point cloud-based navigation device in a quay crane area of the present disclosure. The electronic device 600 according to this embodiment of the present disclosure is described below with reference to FIG. 8. The electronic device 600 shown in FIG. 8 is merely an example and should not should not be construed as limiting the functionality or scope of the disclosed embodiments.

As shown in FIG. 8, the electronic device 600 is embodied as a general-purpose computing device. The components of the electronic device 600 may include, but are not limited to: at least one processing unit 610, at least one storage unit 620, a bus 630 connecting different platform components (including the storage unit 620 and the processing unit 610), a display unit 640, and others components.

The storage unit is configured to store program code that can be executed by the processing unit 610, enabling the processing unit 610 to perform the steps of the navigation method in a quay crane area described above according to various exemplary embodiments of the present disclosure. For example, the processing unit 610 may execute the steps shown in FIG. 1.

The storage unit 620 may include a readable medium in the form of a volatile storage unit, such as a random access memory (RAM) 6201 and/or a cache storage unit 6202, and may further include a read-only memory (ROM) 6203.

The storage unit 620 may further include a program/utility tool 6204 with a set of (at least one) program modules 6205, the program modules 6205 may include, but are not limited to, an operating system, one or more application programs, other program modules, and program data. Each of these examples or some combination thereof may include implementations of network environments.

The bus 630 may represent one or more of several types of bus structures, including a storage unit bus or storage unit controller, a peripheral bus, a graphics acceleration port, a processing unit, or a local bus using any of a variety of bus architectures.

The electronic device 600 may further communicate with one or more external devices 700 (such as a keyboard, a pointing device, a Bluetooth device, etc.), with one or more devices that enable user interaction with the electronic device 600, and/or with any devices (such as a router, a modem, etc.) that enable the electronic device 600 to communicate with one or more other computing devices. Such communication may be realized via an input/output (I/O) interface 650. Furthermore, the electronic device 600 may communicate with one or more networks (such as a local area network (LAN), wide area network (WAN), and/or a public network like the Internet) via a network adapter 660. The network adapter 660 may communicate with other modules of the electronic device 600 via the bus 630. It should be understood that although not shown in the figures, other hardware and/or software modules may be used in conjunction with the electronic device 600, including but not limited to microcode, device drivers, redundant processing units, external disk drive arrays, RAID systems, tape drives, and data backup storage platforms, and so on.

Embodiments of the present disclosure further provide a computer-readable storage medium configured to store a program, and the steps of the point cloud-based navigation method in a quay crane area are realized when the program is executed by a processor. In some alternative implementations, various aspects of the present disclosure may also be implemented in the form of a program product, which includes program code, wherein when the program product runs on a terminal device, causes the terminal device to perform the steps of the navigation method in a quay crane area according to various exemplary embodiments of the present disclosure described above.

As described above, when the program in the computer-readable storage medium of this embodiment is executed, the contour information of cargo ships can be fully utilized to achieve six-degree-of-freedom self-positioning of vehicles in scenarios where docked cargo ships cause GPS positioning to fail, thereby greatly improving the accuracy and safety of alignment between container trucks and quay cranes.

FIG. 9 is a structural diagram of the computer-readable storage medium of the present disclosure. Referring to FIG. 9, a program product 800 for implementing the above method according to an embodiment of the present disclosure is described. The program product 800 may use a portable compact disc read-only memory (CD-ROM) and include program code, which can run on a terminal device such as a personal computer. However, the program product of the present disclosure is not limited thereto. In this document, a readable storage medium may be any tangible medium that contains or stores a program usable by or in conjunction with an instruction execution system, apparatus, or device.

The program product can take the form of any combination of one or more readable media. A readable medium may be a readable signal medium or a readable storage medium. A readable storage medium may include, but is not limited to, an electrical, magnetic, optical, electromagnetic, infrared, or semiconductor system, apparatus, or device, or any combination thereof. More specific examples of readable storage media (a non-exhaustive list) include: electrical connections with one or more wires, portable disks, hard drives, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the above.

A computer-readable storage medium may include a propagated data signal embodied in baseband or as part of a carrier wave, which contains readable program code. Such a propagated data signal may take various forms, including but not limited to electromagnetic signals, optical signals, or any suitable combination of the above. A readable medium may also be any readable medium other than a readable storage medium, which can transmit, propagate, or carry the program for use by or in connection with an instruction execution system, apparatus, or device. The program code contained on a readable storage medium can be transmitted using any suitable medium, including but not limited to wireless, wired, optical fiber, RF, and so on, or any suitable combination of the above.

The program code for performing operations of the present disclosure can be written in any combination of one or more programming languages, including object-oriented programming languages such as Java, C++, and conventional procedural programming languages such as the "C" language or similar programming languages. The program code may execute entirely on the user's computing device, partly on the user's device, as a standalone software package, partly on the user's computing device and partly on a remote computing device, or entirely on a remote computing device or server. In the case of remote computing devices, they may be connected to the user's computing device via any type of network, including local area networks (LAN) or wide area networks (WAN), or may be connected to external computing devices (e.g., through an Internet service provider to connect over the Internet).

As described above, the point cloud-based navigation method, system, and device in a quay crane area, and the storage medium of the present disclosure can fully utilize contour information of cargo ships to achieve six-degree-of-freedom self-positioning of vehicles in scenarios where docked cargo ships cause GPS positioning to fail, thereby greatly improving the accuracy and safety of alignment between container trucks and quay cranes.

The above contents are detailed descriptions of the present disclosure in combination with specific selective embodiments. However, the specific implementation methods of the present disclosure are not limited to these descriptions. For those skilled in the field of the present disclosure, several simple deductions or substitutions without departing from the concept of the present disclosure can be made and should all be regarded as falling into the protection scope of the present disclosure.

## Claims

1. A point cloud-based navigation method in a quay crane area, **characterized in that** the method includes the steps of:
navigating to a peripheral area of a quay crane area along a first navigation path based on GPS positioning data;
performing continuous spatial scanning on at least part of the quay crane area in the peripheral area to establish point cloud map data of a cargo ship in the quay crane area, detecting GPS positioning signal in real time, and matching point cloud objects in the point cloud map data with the GPS positioning data;
generating a second navigation path based on completed point cloud map data when the GPS positioning signal does not meet a preset signal strength threshold; and
performing a loading and unloading operation with the quay crane at least based on the second navigation path.

2. The point cloud-based navigation method in a quay crane area according to claim 1, wherein the step of navigating to a peripheral area of a quay crane area along a first navigation path based on GPS positioning data includes:
establishing the first navigation path to the quay crane area as a destination based on the GPS positioning data;
navigating to the peripheral area of the quay crane area along the first navigation path, wherein the peripheral area is an area surrounding the quay crane area as the center.

3. The point cloud-based navigation method in a quay crane area according to claim 1, wherein the step of performing continuous spatial scanning on at least part of the quay crane area in the peripheral area to establish point cloud map data of a cargo ship in the quay crane area, detecting GPS positioning signal in real time, and matching point cloud objects in the point cloud map data with the GPS positioning data includes:
performing continuous spatial scanning on at least part of the quay crane area when entering the peripheral area;
establishing or updating the point cloud map data of the cargo ship in the quay crane area;
performing point cloud recognition based on the point cloud map data to obtain the point cloud objects;
performing mapping on the cargo ship based on the point cloud data of the cargo ship in the point cloud objects to establish or update surface feature data of the cargo ship;
detecting the GPS positioning signal in real time and matching the surface feature data of the cargo ship with the GPS positioning data.

4. The point cloud-based navigation method in a quay crane area according to claim 3, wherein the step of performing continuous spatial scanning on at least part of the quay crane area in the peripheral area to establish point cloud map data of a cargo ship in the quay crane area, detecting GPS positioning signal in real time, and matching point cloud objects in the point cloud map data with the GPS positioning data further includes:
interacting with surrounding terminals that have already mapped the cargo ship to supplement local surface feature data of the cargo ship.

5. The point cloud-based navigation method in a quay crane area according to claim 3, wherein the step of generating a second navigation path based on completed point cloud map data when the GPS positioning signal does not meet a preset signal strength threshold includes:
determining whether the GPS positioning signal meets the preset signal strength threshold; if yes, returning to the step of performing continuous spatial scanning on at least part of the quay crane area in the peripheral area; if no, generating the second navigation path based on the surface feature data of the cargo ship and a preset loading and unloading target position.

6. The point cloud-based navigation method in a quay crane area according to claim 1, wherein the step of performing a loading and unloading operation with the quay crane at least based on the second navigation path includes:
navigating to a preset loading and unloading target position along the second navigation path;
performing a loading and unloading operation with the quay crane after arriving at the preset loading and unloading target position.

7. The point cloud-based navigation method in a quay crane area according to claim 1, further including the steps of:
continuing spatial scanning to supplement the point cloud map data, and establishing a third navigation path to leave the quay crane area based on the point cloud map data after the loading and unloading operation is completed;
navigating away from the quay crane area along the third navigation path, detecting the GPS positioning signal in real time, and switching back to navigation at least based on GPS positioning data when the GPS positioning signal meets the preset signal strength threshold.

8. A point cloud-based navigation system in a quay crane area, **characterized in that** the system includes:
a first path module configured to navigate to a peripheral area of the quay crane area along a first navigation path based on GPS positioning data;
a spatial scanning module configured to perform continuous spatial scanning on at least part of the quay crane area in the peripheral area to establish point cloud map data of a cargo ship in the quay crane area, detect the GPS positioning signal in real time, and match point cloud objects in the point cloud map data with the GPS positioning data;
a second path module configured to generate a second navigation path based on completed point cloud map data when the GPS positioning signal does not meet a preset signal strength threshold; and
a loading and unloading navigation module configured to perform a loading and unloading operation with the quay crane at least based on the second navigation path.

9. The point cloud-based navigation system in a quay crane area according to claim 8, wherein the spatial scanning module is configured to:
perform continuous spatial scanning on at least part of the quay crane area when entering the peripheral area; establish or update point cloud map data of a cargo ship in the quay crane area; perform point cloud recognition based on the point cloud map data to obtain point cloud objects; perform mapping on the cargo ship based on the point cloud data of the cargo ship in the point cloud objects to establish or update surface feature data of the cargo ship; detect the GPS positioning signal in real time and match the surface feature data of the cargo ship with the GPS positioning data.

10. The point cloud-based navigation system in a quay crane area according to claim 8, further including:
a third path module configured to continue spatial scanning to supplement the point cloud map data and establish a third navigation path to leave the quay crane area based on the point cloud map data after the loading and unloading operation is completed;
a navigation switching module configured to navigate away from the quay crane area along the third navigation path, detect the GPS positioning signal in real time, and switch back to navigation at least based on the GPS positioning data when the GPS positioning signal meets the preset signal strength threshold.

11. A point cloud-based navigation device in a quay crane area, **characterized in that** the device includes:
a processor;
a memory configured to store executable instructions for the processor;
wherein the processor is configured to execute the steps of the point cloud-based navigation method in a quay crane area according to any one of claims 1 to 7 by executing the executable instructions.

12. A computer-readable storage medium for storing a program, **characterized in that** the steps of the point cloud-based navigation method in a quay crane area according to any one of claims 1 to 7 are realized when the program is executed.
